# EUROPEAN PATENT SPECIFICATION

(11) **EP 4 476 126 B1**
(45) Date of publication and mention of the grant of the patent: **10.06.2026**
(21) Application number: 22847150.4
(22) Date of filing: 21.12.2022
(51) Int. Cl.: B62H 5/00, B62K 3/00

(54) **DOCKING MODULE FOR TWO WHEELED VEHICLE**
ANDOCKMODUL FÜR ZWEIRADFAHRZEUG
MODULE D'ACCUEIL POUR VÉHICULE À DEUX ROUES

(30) Priority: 11.02.2022 US 202217669996
(43) Date of publication of application: 18.12.2024
(73) Proprietor: OKAFOR, Chukwudi, London WC1N 3AX (GB)
(72) Inventor: PLAKHOTNIUK, Vasyl, London Greater London WC2H 9JQ (GB); COSTACURTA, Francesco, London Greater London WC2H 9JQ (GB); TONINI, Alberto, London Greater London WC2H 9JQ (GB); OKAFOR, Chukwudi, London Greater London WC2H 9JQ (GB)
(86) International application number: PCT/GB2022/053338
(87) International publication number: WO 2023/152461

(56) References cited:
- WO-A1-2021/191087
- WO-A2-2009/136766
- WO-A2-2011/010878
- CN-A- 105 711 683
- CN-A- 106 240 680
- CN-A- 107 060 404
- CN-A- 107 344 580
- CN-A- 107 738 707
- CN-A- 108 001 573
- CN-B- 107 161 241
- CN-U- 209 176 817
- KR-A- 20090 053 775
- KR-A- 20130 021 754
- KR-A- 20160 012 483

## Description

### Cross Reference to Related Applications

### Field of Invention.

The present invention relates generally to docking systems for light vehicles. More specifically, the present invention relates to a docking module configured to perform an assisted docking protocol to store a light vehicle in a substantially vertical position.

### Background

The use of personal electric vehicles is becoming more and more ubiquitous, and this is a trend which shows no sign of slowing down, as light electric vehicles such as electric scooters and bicycles provide an energy efficient and convenient means of transport through congested environments such as big cities.

With this increase in usage, the storage of these vehicles has become an increasing logistical problem. Currently available docking station solutions usually involve long rows of stands to which two-wheeled vehicles such as bikes and scooters may be locked, such that they are adjacent and parallel with each other. This solution is not particularly space efficient, as the vehicles are docked in a horizontal position, and are longer than they are tall. Furthermore, the adaptability of these prior art docking systems is limited, as each stand must be anchored individually to prevent theft.

A more space-efficient means for docking light personal vehicles is needed which stores vehicles in a vertical position, whilst still allowing them to be easily docked and undocked without requiring a user to perform heavy lifting of the vehicle themselves.

Furthermore, a docking solution is needed which can be coupled to an anchor point in a versatile and modular manner.

It is within this context that the present invention is provided.

WO 2021/191087 A1 and CN 108 001 573 A are examples for state of the art docking systems for two-wheeled light vehicles.

### Summary

The present disclosure provides a docking module for a two-wheeled personal vehicle which is capable of performing an assisted docking protocol to automatically lift a vehicle into a vertical position during the docking process to provide more space-efficient storage. Vehicles docked this way are securely stored until needed and can then be undocked in a similarly assisted manner. The docking module achieves this using a motorized assembly that lifts a front wheel clamp up from the ground in response to a wheel sensor trigger. The lifting continues until the same wheel sensor detects proximity of the rear wheel of the vehicle, at which point the vehicle is locked into place. No lifting is required by the user, and the modular design of the dock allows installation on various anchor points.

According to a first aspect of the present disclosure, there is provided a docking module for a two-wheeled personal vehicle, the module comprising: a protective housing; a motorized assembly disposed inside the housing; a conveyor with a vertical track disposed on a first side of the housing and which is coupled to the motor assembly; a front wheel clamp mounted to the conveyor exterior; a wheel sensor positioned at the bottom of the first side of the housing.

The docking module further comprises a controller, the controller being coupled to the wheel sensor, the front wheel clamp, and the motorized assembly, and being configured to implement an assisted docking process in response to a detection from the wheel sensor, causing the front wheel clamp to lock about a vehicle front wheel and lift the vehicle into a vertical position by raising of the front wheel clamp up along the conveyor until a second detection from the wheel sensor indicates the proximity of a rear wheel at the bottom of the housing.

In some embodiments, the docking module further comprises a charging port or cable coupled to the controller, and the controller is further configured to direct power to the charging port or cable after the assisted docking process is completed.

In some embodiments, the wheel clamp comprises a linear actuator for applying a predetermined holding force to the front wheel along the horizontal direction.

In some embodiments, the wheel clamp further comprises an arrangement of three rods configured to encompass a scooter front wheel.

In some embodiments, the wheel clamp comprises a horizontally oriented rod mounted to a first clamping plate and configured for horizontal movement, and a second clamping plate configured to interlock with the rod and the first clamping plate after the rod has been inserted horizontally through the spokes of a bicycle wheel.

The wheel clamp may also comprise an induction/capacitive sensor coupled to the controller, and the controller is further configured to halt movement of the clamping plates in response to a detection indicating that a wheel spoke is in the way of the rod form the induction/capacitive sensor.

In some embodiments, the docking module further comprises ramp positioned at the bottom of the first side of the housing for assisting users in bringing the front wheel of their vehicle into position for locking by the front wheel clamp.

In some embodiments, the docking module further comprises a locking mechanism coupled to the controller and positioned on a middle portion of the housing, the controller being configured to operate the locking mechanism to clamp about the body of a docked vehicle for support and theft protection following the second detection from the wheel sensor.

In such examples, the locking mechanism may comprise a pair of motorized clamping elements protruding from either side of the first side of the housing, and the clamping elements may be configured to retract within the housing when not in use.

In some embodiments, comprising a coupling mechanism with a bracket and power supply port disposed on an opposing second side of the housing to couple the module to an anchor device.

In some embodiments, the motorized assembly comprises a lead screw coupled to an electric motor to prevent unintended backwards motion of the conveyor in the event of a power failure.

In some embodiments, the front wheel clamp is coupled to the conveyor by a rotatable joint to accommodate changes in orientation of the front wheel of a vehicle during the assisted docking process.

The rotatable joint may comprises a rotatable support bearing coupled to a pair of internal guide rails of the motorized assembly.

In some embodiments, comprising a rear wheel clamp coupled to the controller and positioned at the bottom of the housing.

In such examples, the controller may be further configured to close the rear wheel clamp about the rear wheel of a docked vehicle in response to the second wheel sensor detection.

In some embodiments, the motorized assembly comprises one or more weight or force sensors configured to detect a current strain placed on the motorized assembly by a docked or docking vehicle, and wherein the controller is configured to halt a docking protocol in response to a detection that the strain is above a predetermined threshold.

### Brief Description of the Drawings

Various embodiments of the invention are disclosed in the following detailed description and accompanying drawings.
FIG.1 illustrates an isometric perspective view of a first example configuration of a docking module according to the present disclosure with a scooter vehicle having its front wheel in proximity to the front wheel clamp at the start of an assisted docking process.
FIG.2 illustrates an isometric perspective view the first example docking module with the scooter vehicle having completed the assisted docking process and being stored in a vertical position. The docking module is shown with the exterior housing removed.
FIG.3 illustrates an isometric perspective view of a second example configuration of a docking module according to the present disclosure with a bicycle vehicle having its front wheel in proximity to the front wheel clamp at the start of an assisted docking process. The docking module is shown with the exterior housing removed.
FIG.4 illustrates an isometric perspective view the second example docking module with the bicycle having completed the assisted docking process and being stored in a vertical position. The docking module is shown with the exterior housing removed.
FIG.5 illustrates a close-up view of the front wheel clamp of the first example configuration engaged about the scooter wheel.
FIG.6 illustrates a close-up of the front wheel clamp of the second example configuration engaged about the bicycle wheel.

Common reference numerals are used throughout the figures and the detailed description to indicate like elements. One skilled in the art will readily recognize that the above figures are examples and that other architectures, modes of operation, orders of operation, and elements/functions can be provided and implemented without departing from the characteristics and features of the invention, as set forth in the claims.

### Detailed Description and Preferred Embodiment

The following is a detailed description of exemplary embodiments to illustrate the principles of the invention. The embodiments are provided to illustrate aspects of the invention, but the invention is not limited to any embodiment. The scope of the invention encompasses numerous alternatives, modifications and equivalent; it is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention. As used herein, the term "and/or" includes any combinations of one or more of the associated listed items. As used herein, the singular forms "a," "an," and "the" are intended to include the plural forms as well as the singular forms, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The terms "about" and "approximately" shall generally mean an acceptable degree of error or variation for the quantity measured given the nature or precision of the measurements. Typical, exemplary degrees of error or variation are within 20 percent (%), preferably within 10%, and more preferably within 5% of a given value or range of values. Numerical quantities given in this description are approximate unless stated otherwise, meaning that the term "about" or "approximately" can be inferred when not expressly stated.

It will be understood that when a feature or element is referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments.

The terminology used herein is for the purpose of describing particular embodiments only and is not intended to be limiting. As used herein, the singular forms "a," "an" and "the" are intended to include the plural forms as well, unless the context clearly indicates otherwise.

Spatially relative terms, such as "under," "below," "lower," "over," "upper" and the like, may be used herein for ease of description to describe one element or feature's relationship to another when the apparatus is right side up.

The terms "first," "second," and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

The present disclosure provides a novel design for a docking station for a two-wheeled light vehicle. Two embodiments are described, one for docking scooters and one for docking bicycles, but the principles applied in both are the same - the ability to execute an assisted docking sequence via a motorized assembly to raise a two wheeled vehicle into a vertical position to store it in a more space-efficient manner, and the use of a wheel sensor to trigger the start and end of the assisted docking process. Both modules are also designed to be able to fit into and interface with a core anchoring device which is the subject of a co-pending patent application.

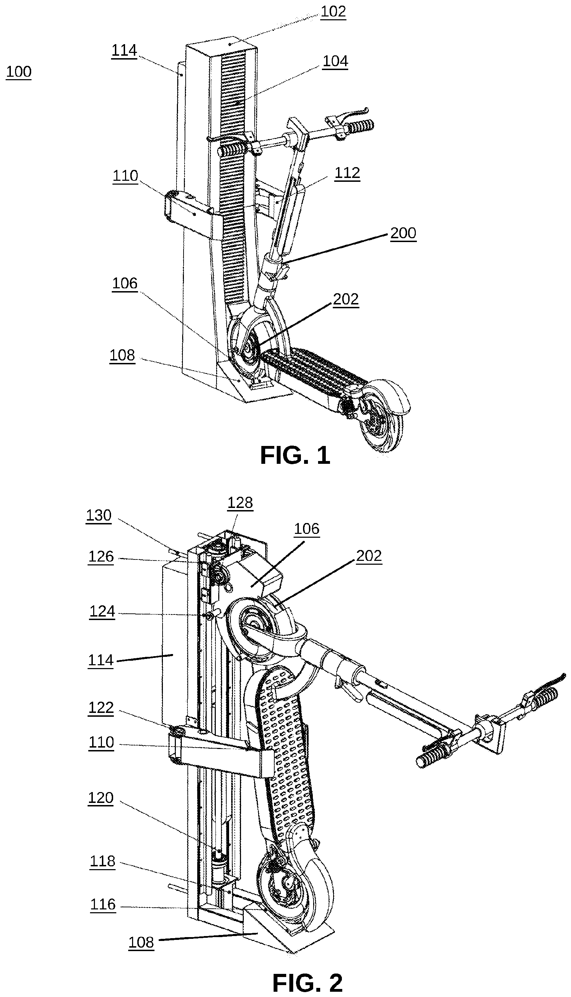

Referring to FIG.1, an isometric perspective view is shown of a first example configuration of a docking module 100 for a scooter vehicle 200, with the scooter 200 having its front wheel 202 in proximity to the front wheel clamp 106 of the docking module 100 at the beginning of an assisted docking process.

As can be seen, the module 100 has an exterior protective housing 102, which has a conveyor mechanism 104 spanning the entire height of the module on one side from the bottom to the top. The front wheel clamp 106 is mounted to the conveyor 104, and can move up or down along its length as it is moved by an internal motorized assembly. In the present example the bottom of the housing has a ramp 108 that allows the scooter front wheel 202 to be easily rolled into place ready for docking.

The ramp has a wheel sensor 116 installed on it, which can be a pressure sensor or any other type of sensor suitable for detecting the wheel's presence or proximity. When the wheel is detected to be in position, a controller of the docking module 100 causes the front wheel clamp 106 to close around the scooter wheel, and begins lifting the clamp upwards along the conveyor 104, bringing the front wheel up with it as the assisted docking process begins.

The height to which the front wheel 202 should be lifted on the docking module 100 will vary according to the scooter's size and make. Thus, instead of stopping at a predetermined height, the controller is configured to continue raising the wheel until the rear wheel triggers the wheel sensor, which remains at ground level, a second time. This indicates that the scooter being docked has reached a vertical position, and the controller stops the motorized assembly from lifting the front wheel further.

In order to make the docking of the scooter more secure, and to deter theft, the module of the present example is also provided with a pair of clamping arms 110 and 112 halfway up its height. The clamping arms are connected to the housing by a motorized hinge joint 122 on each side. Once the second wheel sensor trigger has been detected, the controller operates a separate motor to close these arms about the body of the scooter, locking it in place until an undocking sequence is initiated.

The controller may be housed in a rear side compartment 114, along with any other control and power supply circuitry. In some embodiments, this rear side of the docking module is configured to interface with an anchor device to utilize power therefrom, and the controller of the docking module 100 is configured to interface with and receive instructions from the anchor device controller.

Referring to FIG.2, the example docking module 100 of the first embodiment is shown with the scooter vehicle 200 having completed the assisted docking process and being stored in a vertical position.

The docking module 100 is shown with the exterior housing removed to make the internal components of the motor assembly visible. In the present example, the assembly comprises an electric motor 118 near the bottom of the module which is coupled to a lead screw 120 that runs the entire length of the module, and which is coupled to the wheel clamp 106. The wheel clamp 106 in turn is coupled to a pair of guide rails 126, such that as the lead screw 120 is turned by motor 118, the wheel clamp 106 is brought up or down the conveyor in a straight line.

Using lead screw 120 for moving the wheel clamp 106 is advantageous because it prevents the wheel clamp 106 from falling when the motor assembly is not powered, and does not require any power to maintain the vertical position of a docked scooter.

The wheel clamp of the present example utilizes a three-pin system to surround the circumference of the scooter wheel, with a first movable pin on one side, a hinged joint 124 with a second pin in the middle, and a third pin on the opposing side of the wheel. The wheel clamp 106 is mounted to the guide rails 126 by a set of bearings 128 that give it a rotational degree of freedom to account for the rotation of the scooter wheel as it transitions from a horizontal to a vertical position and vice versa.

A set of screws 130 on the rear side of the module 100 may be used to coupled it to an anchor device.

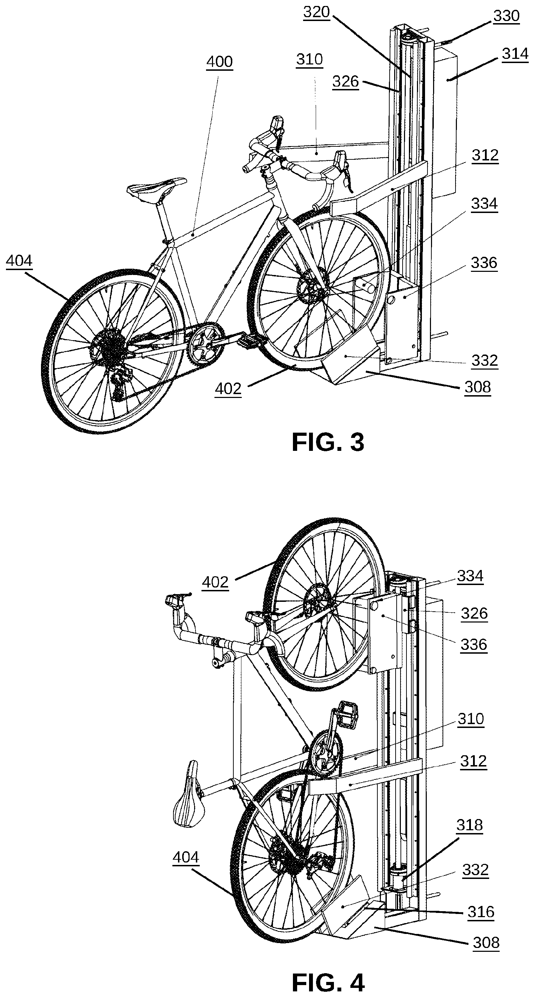

Referring to FIG.3 and FIG.4, similar perspective views are shown of a second example configuration of a docking module designed for docking bicycles. FIG.3 shows a bicycle vehicle 400 having its front wheel 402 in proximity to the front wheel clamp 306 at the start of an assisted docking process and FIG.4 shows the bicycle after the docking process has been completed. The docking module 200 is shown with the exterior housing removed in both figures.

The overall structure and function of the bicycle docking module is highly similar to that of the scooter module, with a ramp 308 and a wheel sensor 316 for detecting the front wheel 402 in proximity to the ramp, an electric motor 318 and lead screw 320 for raising a wheel clamp to the top of the module along a set of guide rails 326, and a pair of longer clamping arms 310 and 312 for securing the body of a docked bicycle. The rear of the module 200 also comprises a control circuitry box 314 and set of screws 330 for interfacing with an anchor device.

The structure of the wheel clamp is where the majority of the design differences lie, as a bicycle wheel is much larger and cannot be encompassed in a practical way, the wheel clamp of the second embodiment instead utilizes a pair of locking plates. One movable locking plate 334 with a pin in it that is moved horizontally to insert the pin through the spokes of a bicycle wheel 402, and one static locking plate 336 which receives the pin and acts in tandem with the movable plate 334 to clamp the wheel between them.

This clamping process is initiated in response to a first detection from the wheel sensor 316. The wheel clamp may comprise a capacitive or induction sensor for detecting when the spokes of the bicycle wheel are in the way of pin 334.

As bicycles are generally heavier than scooters, the bicycle docking module 300 is also provided with a rear wheel clamp 332 which is coupled to the ramp 308. This rear wheel clamp also comprises a pair of plates which can be operated by the controller to close around the rear wheel 404 of the bicycle in response to a second detection from the wheel sensor 316.

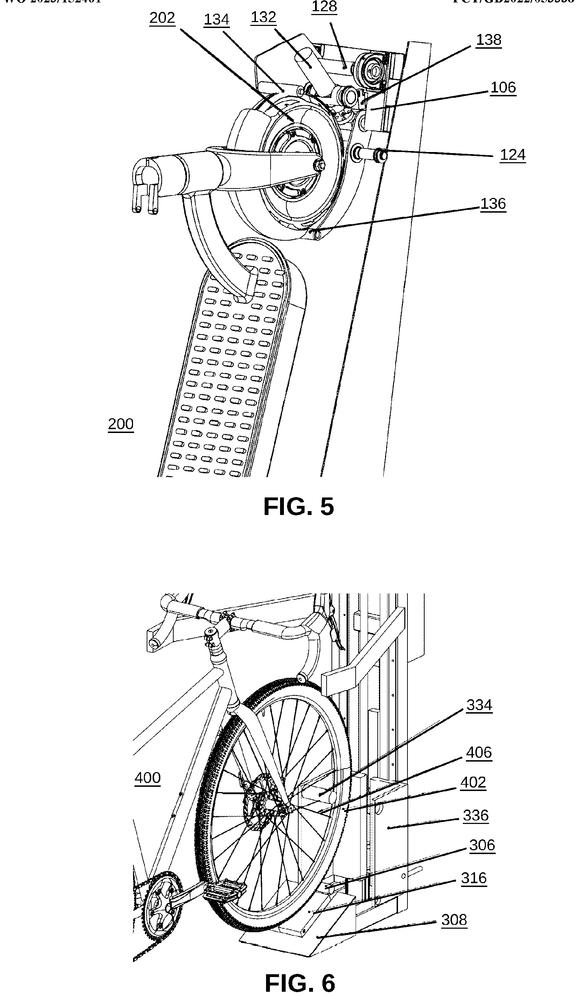

Returning to the scooter module of the first example, FIG.5 shows a suitable construction of a scooter wheel clamp in more detail.

Since scooter wheels come in various sizes, the clamp needs to be able to adjust the positions of the three pins to match a scooter which is currently being docked and then apply an appropriate clamping pressure. This is achieved by having one pin 136 which is movable by changing the angle of the hinged joint 124 in which the second pin is installed. The movable pin 136 is then drawn in, pushing the front of the wheel 202 up against the third pin 134. The force applied by the clamp is driven by a linear actuator 132, which may be regulated by a limit switch 138.

As mentioned above, the entire wheel clamp assembly has a rotational degree of freedom with respect to the housing through the bearing 128, allowing the scooter to smoothly transition between vertical and horizontal even with the front wheel clamped.

FIG.6 also shows a close-up of the front wheel clamp of the bicycle docking module 300 engaged on a bicycle front wheel 402. As can be seen, pin 334 is inserted through the spokes 406. The bottom of the wheel engages pressure sensor 316, causing the assisted docking process to begin by the clamping plates being brought together.

The controller can be any suitable type of computer. A computer may be a uniprocessor or multiprocessor machine. Accordingly, a computer may include one or more processors and, thus, the aforementioned computer system may also include one or more processors. Examples of processors include sequential state machines, microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), gated logic, programmable control boards (PCBs), and other suitable hardware configured to perform the various functionality described throughout this disclosure.

Additionally, the computer may include one or more memories. Accordingly, the aforementioned computer systems may include one or more memories. A memory may include a memory storage device or an addressable storage medium which may include, by way of example, random access memory (RAM), static random access memory (SRAM), dynamic random access memory (DRAM), electronically erasable programmable read-only memory (EEPROM), programmable read-only memory (PROM), erasable programmable read-only memory (EPROM), hard disks, floppy disks, laser disk players, digital video disks, compact disks, video tapes, audio tapes, magnetic recording tracks, magnetic tunnel junction (MTJ) memory, optical memory storage, quantum mechanical storage, electronic networks, and/or other devices or technologies used to store electronic content such as programs and data. In particular, the one or more memories may store computer executable instructions that, when executed by the one or more processors, cause the one or more processors to implement the procedures and techniques described herein. The one or more processors may be operably associated with the one or more memories so that the computer executable instructions can be provided to the one or more processors for execution. For example, the one or more processors may be operably associated to the one or more memories through one or more buses.

A computer may advantageously contain control logic, or program logic, or other substrate configuration representing data and instructions, which cause the computer to operate in a specific and predefined manner as, described herein. In particular, the computer programs, when executed, enable a control processor to perform and/or cause the performance of features of the present disclosure. The control logic may advantageously be implemented as one or more modules. The modules may advantageously be configured to reside on the computer memory and execute on the one or more processors. The modules include, but are not limited to, software or hardware components that perform certain tasks. Thus, a module may include, by way of example, components, such as, software components, processes, functions, subroutines, procedures, attributes, class components, task components, object-oriented software components, segments of program code, drivers, firmware, micro code, circuitry, data, and/or the like.

It should be understood that manipulations within the computer are often referred to in terms of adding, comparing, moving, searching, or the like, which are often associated with manual operations performed by a human operator. It is to be understood that no involvement of the human operator may be necessary, or even desirable. The operations described herein are machine operations performed in conjunction with the human operator or user that interacts with the computer or computers.

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive. While specific configurations of the docking module have been described in a specific manner referring to the illustrated embodiments, it is understood that the present invention can be applied to a wide variety of solutions which fit within the scope of the claims. There are many alternative ways of implementing the invention.

It is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A docking module (100) for a two-wheeled personal vehicle (200), the module comprising:
a protective housing (102);
a motorised assembly disposed inside the housing;
a conveyor (104) with a vertical track disposed on a first side of the housing and which is coupled to the motorised assembly;
a front wheel clamp (106) mounted to the conveyor exterior;
**characterized by** a wheel sensor (116) positioned at the bottom of the first side of the housing; and
a controller, the controller being coupled to the wheel sensor, (116) the front wheel clamp (106); and the motorised assembly, and being configured to implement an assisted docking process in response to a detection from the wheel sensor, causing the front wheel clamp to lock about a vehicle front wheel (202) and lift the vehicle into a vertical position by raising of the front wheel clamp up along the conveyor until a second detection from the wheel sensor indicates the proximity of a rear wheel at the bottom of the housing.

2. A docking module according to claim 1, wherein the docking module further comprises a charging port or cable coupled to the controller, and the controller is further configured to direct power to the charging port or cable after the assisted docking process is completed and/or
wherein the wheel clamp comprises a linear actuator for applying a predetermined holding force to the front wheel along the horizontal direction.

3. A docking module according to claim 1, wherein the wheel clamp further comprises an arrangement of three rods configured to encompass a scooter front wheel.

4. A docking module according to claim 1, wherein the wheel clamp comprises a horizontally oriented rod mounted to a first clamping plate and configured for horizontal movement, and a second clamping plate configured to interlock with the rod and the first clamping plate after the rod has been inserted horizontally through the spokes of a bicycle wheel.

5. A docking module acceding to claim 4, wherein the wheel clamp further comprises an induction/capacitive sensor coupled to the controller, and the controller is further configured to halt movement of the clamping plates in response to a detection indicating that a wheel spoke is in the way of the rod form the induction/capacitive sensor.

6. A docking module according to claim 1, wherein the docking module further comprises ramp positioned at the bottom of the first side of the housing for assisting users in bringing the front wheel of their vehicle into position for locking by the front wheel clamp.

7. A docking module according to claim 1, wherein the docking module further comprises a locking mechanism coupled to the controller and positioned on a middle portion of the housing, the controller being configured to operate the locking mechanism to clamp about the body of a docked vehicle for support and theft protection following the second detection from the wheel sensor.

8. A docking module according to claim 7, wherein the locking mechanism comprises a pair of motorised clamping elements protruding from either side of the first side of the housing.

9. A docking module according to claim 8, wherein the clamping elements are configured to retract within the housing when not in use.

10. A docking module according to claim 1, further comprising a coupling mechanism with a bracket and power supply port disposed on an opposing second side of the housing to couple the module to an anchor device and/or
wherein the motorised assembly comprises a lead screw coupled to an electric motor to prevent unintended backwards motion of the conveyor in the event of a power failure.

11. A docking module according to claim 1, wherein the front wheel clamp is coupled to the conveyor by a rotatable joint to accommodate changes in orientation of the front wheel of a vehicle during the assisted docking process.

12. A docking module according to claim 11, wherein the rotatable joint comprises a rotatable support bearing coupled to a pair of internal guide rails of the motorised assembly.

13. A docking module according to claim 1, further comprising a rear wheel clamp coupled to the controller and positioned at the bottom of the housing.

14. A docking module according to claim 13, wherein the controller is further configured to close the rear wheel clamp about the rear wheel of a docked vehicle in response to the second wheel sensor detection.

15. A docking module according to claim 1, wherein the motorised assembly comprises one or more weight or force sensors configured to detect a current strain placed on the motorised assembly by a docked or docking vehicle, and wherein the controller is configured to halt a docking protocol in response to a detection that the strain is above a predetermined threshold.

## Patentansprüche

1. Andockmodul (100) für ein zweirädriges Personenfahrzeug (200), wobei das Modul umfasst:
ein Schutzgehäuse (102);
eine motorisierte Baugruppe, die innerhalb des Gehäuses angeordnet ist;
einen Förderer (104) mit einer vertikalen Bahn, die an einer ersten Seite des Gehäuses angeordnet ist und die mit der motorisierten Baugruppe gekoppelt ist;
eine Vorderradklemme (106), die an der Außenseite des Förderers montiert ist; **gekennzeichnet durch** einen Radsensor (116), der am unteren Ende der ersten Seite des Gehäuses positioniert ist; und
eine Steuerungsvorrichtung, wobei die Steuerungsvorrichtung mit dem Radsensor (116), der Vorderradklemme (106) und der motorisierten Baugruppe gekoppelt ist und dazu konfiguriert ist, einen assistierten Andockvorgang als Reaktion auf eine Erfassung durch den Radsensor durchzuführen, wobei die Vorderradklemme veranlasst wird, sich um ein Fahrzeugvorderrad (202) herum zu verriegeln und das Fahrzeug in eine vertikale Position anzuheben, indem die Vorderradklemme entlang des Förderers nach oben angehoben wird, bis eine zweite Erfassung durch den Radsensor die Nähe eines Hinterrades am unteren Ende des Gehäuses anzeigt.

2. Andockmodul nach Anspruch 1, wobei das Andockmodul ferner einen Ladeanschluss oder ein Ladekabel umfasst, der/das mit der Steuerungsvorrichtung gekoppelt ist, und die Steuerungsvorrichtung ferner dazu konfiguriert ist, nach Abschluss des assistierten Andockvorgangs Strom zum Ladeanschluss oder Ladekabel zu leiten, und/oder wobei die Radklemme einen Linearaktor zum Aufbringen einer vorbestimmten Haltekraft auf das Vorderrad in horizontaler Richtung umfasst.

3. Andockmodul nach Anspruch 1, wobei die Radklemme ferner eine Anordnung von drei Stangen umfasst, die dazu konfiguriert sind, ein Vorderrad eines Tretrollers zu umschließen.

4. Andockmodul nach Anspruch 1, wobei die Radklemme eine horizontal ausgerichtete Stange umfasst, die an einer ersten Klemmplatte montiert und für eine horizontale Bewegung konfiguriert ist, sowie eine zweite Klemmplatte, die dazu konfiguriert ist, mit der Stange und der ersten Klemmplatte zu verriegeln, nachdem die Stange horizontal durch die Speichen eines Fahrradrades eingeführt worden ist.

5. Andockmodul nach Anspruch 4, wobei die Radklemme ferner einen Induktions-/Kapazitätssensor umfasst, der mit der Steuerungsvorrichtung gekoppelt ist, und die Steuerungsvorrichtung ferner dazu konfiguriert ist, die Bewegung der Klemmplatten als Reaktion auf eine Erfassung anzuhalten, die anzeigt, dass sich eine Radspeiche im Weg der Stange befindet, wobei die Erfassung vom Induktions-/Kapazitätssensor stammt.

6. Andockmodul nach Anspruch 1, wobei das Andockmodul ferner eine Rampe umfasst, die am unteren Ende der ersten Seite des Gehäuses positioniert ist, um Benutzern dabei zu helfen, das Vorderrad ihres Fahrzeugs in die Position zum Verriegeln durch die Vorderradklemme zu bringen.

7. Andockmodul nach Anspruch 1, wobei das Andockmodul ferner einen Verriegelungsmechanismus umfasst, der mit der Steuerungsvorrichtung gekoppelt und an einem mittleren Abschnitt des Gehäuses positioniert ist, wobei die Steuerungsvorrichtung dazu konfiguriert ist, den Verriegelungsmechanismus zu betätigen, um den Körper eines angedockten Fahrzeugs zur Abstützung und zum Diebstahlschutz im Anschluss an die zweite Erfassung durch den Radsensor zu umklammern.

8. Andockmodul nach Anspruch 7, wobei der Verriegelungsmechanismus ein Paar motorisierter Klemmelemente umfasst, die auf beiden Seiten der ersten Seite des Gehäuses hervorstehen.

9. Andockmodul nach Anspruch 8, wobei die Klemmelemente dazu konfiguriert sind, sich in das Gehäuse zurückzuziehen, wenn sie nicht in Gebrauch sind.

10. Andockmodul nach Anspruch 1, ferner umfassend einen Kopplungsmechanismus mit einer Halterung und einem Stromversorgungsanschluss, die an einer gegenüberliegenden zweiten Seite des Gehäuses angeordnet sind, um das Modul mit einer Ankervorrichtung zu koppeln, und/oder wobei die motorisierte Baugruppe eine Leitspindel umfasst, die mit einem Elektromotor gekoppelt ist, um eine unbeabsichtigte Rückwärtsbewegung des Förderers im Falle eines Stromausfalls zu verhindern.

11. Andockmodul nach Anspruch 1, wobei die Vorderradklemme mit dem Förderer durch ein drehbares Gelenk gekoppelt ist, um Änderungen der Ausrichtung des Vorderrades eines Fahrzeugs während des assistierten Andockvorgangs aufzunehmen.

12. Andockmodul nach Anspruch 11, wobei das drehbare Gelenk ein drehbares Stützlager umfasst, das mit einem Paar interner Führungsschienen der motorisierten Baugruppe gekoppelt ist.

13. Andockmodul nach Anspruch 1, ferner umfassend eine Hinterradklemme, die mit der Steuerungsvorrichtung gekoppelt und am unteren Ende des Gehäuses positioniert ist.

14. Andockmodul nach Anspruch 13, wobei die Steuerungsvorrichtung ferner dazu konfiguriert ist, die Hinterradklemme um das Hinterrad eines angedockten Fahrzeugs herum als Reaktion auf die zweite Radsensorerfassung zu schließen.

15. Andockmodul nach Anspruch 1, wobei die motorisierte Baugruppe einen oder mehrere Gewichts- oder Kraftsensoren umfasst, die dazu konfiguriert sind, eine aktuelle Belastung zu erfassen, die durch ein angedocktes oder andockendes Fahrzeug auf die motorisierte Baugruppe ausgeübt wird, und wobei die Steuerungsvorrichtung dazu konfiguriert ist, einen Andockvorgang als Reaktion auf eine Erfassung, dass die Belastung über einem vorbestimmten Schwellenwert liegt, anzuhalten.

## Revendications

1. Module d'amarrage (100) pour un véhicule personnel à deux roues (200), le module comprenant :
un boîtier de protection (102) ;
un ensemble motorisé disposé à l'intérieur du boîtier ;
un convoyeur (104) comportant une voie verticale disposée sur un premier côté du boîtier et qui est couplé à l'ensemble motorisé ;
une pince de roue avant (106) montée sur l'extérieur du convoyeur;
**caractérisé par** un capteur de roue (116) positionné au bas du premier côté du boîtier ;
et un dispositif de commande, le dispositif de commande étant couplé au capteur de roue (116), à la pince de roue avant (106) et à l'ensemble motorisé, et étant configuré pour mettre en œuvre un processus d'amarrage assisté en réponse à une détection provenant du capteur de roue, amenant la pince de roue avant à se verrouiller autour d'une roue avant de véhicule (202) et à soulever le véhicule dans une position verticale par élévation de la pince de roue avant le long du convoyeur jusqu'à ce qu'une seconde détection provenant du capteur de roue indique la proximité d'une roue arrière au bas du boîtier.

2. Module d'amarrage selon la revendication 1, dans lequel le module d'amarrage comprend en outre un port de charge ou un câble couplé au dispositif de commande, et le dispositif de commande est en outre configuré pour diriger l'alimentation électrique vers le port de charge ou le câble après l'achèvement du processus d'amarrage assisté et/ou dans lequel la pince de roue comprend un actionneur linéaire pour appliquer une force de maintien prédéterminée à la roue avant dans la direction horizontale.

3. Module d'amarrage selon la revendication 1, dans lequel la pince de roue comprend en outre un agencement de trois tiges configurées pour entourer une roue avant de trottinette.

4. Module d'amarrage selon la revendication 1, dans lequel la pince de roue comprend une tige orientée horizontalement montée sur une première plaque de serrage et configurée pour un mouvement horizontal, et une seconde plaque de serrage configurée pour s'emboîter avec la tige et la première plaque de serrage après que la tige a été insérée horizontalement à travers les rayons d'une roue de bicyclette.

5. Module d'amarrage selon la revendication 4, dans lequel la pince de roue comprend en outre un capteur à induction/capacitif couplé au dispositif de commande, et le dispositif de commande est en outre configuré pour arrêter le mouvement des plaques de serrage en réponse à une détection indiquant qu'un rayon de roue se trouve sur le trajet de la tige provenant du capteur à induction/capacitif.

6. Module d'amarrage selon la revendication 1, dans lequel le module d'amarrage comprend en outre une rampe positionnée au bas du premier côté du boîtier pour aider les utilisateurs à amener la roue avant de leur véhicule en position pour le verrouillage par la pince de roue avant.

7. Module d'amarrage selon la revendication 1, dans lequel le module d'amarrage comprend en outre un mécanisme de verrouillage couplé au dispositif de commande et positionné sur une partie médiane du boîtier, le dispositif de commande étant configuré pour actionner le mécanisme de verrouillage afin de serrer autour du corps d'un véhicule amarré pour le support et la protection contre le vol à la suite de la seconde détection provenant du capteur de roue.

8. Module d'amarrage selon la revendication 7, dans lequel le mécanisme de verrouillage comprend une paire d'éléments de serrage motorisés faisant saillie de part et d'autre du premier côté du boîtier.

9. Module d'amarrage selon la revendication 8, dans lequel les éléments de serrage sont configurés pour se rétracter à l'intérieur du boîtier lorsqu'ils ne sont pas utilisés.

10. Module d'amarrage selon la revendication 1, comprenant en outre un mécanisme de couplage avec une patte de fixation et un port d'alimentation électrique disposés sur un second côté opposé du boîtier pour coupler le module à un dispositif d'ancrage et/ou dans lequel l'ensemble motorisé comprend une vis-mère couplée à un moteur électrique pour empêcher un mouvement arrière involontaire du convoyeur en cas de panne d'alimentation électrique.

11. Module d'amarrage selon la revendication 1, dans lequel la pince de roue avant est couplée au convoyeur par une articulation rotative pour s'adapter aux changements d'orientation de la roue avant d'un véhicule pendant le processus d'amarrage assisté.

12. Module d'amarrage selon la revendication 11, dans lequel l'articulation rotative comprend un palier de support rotatif couplé à une paire de rails de guidage internes de l'ensemble motorisé.

13. Module d'amarrage selon la revendication 1, comprenant en outre une pince de roue arrière couplée au dispositif de commande et positionnée au bas du boîtier.

14. Module d'amarrage selon la revendication 13, dans lequel le dispositif de commande est en outre configuré pour fermer la pince de roue arrière autour de la roue arrière d'un véhicule amarré en réponse à la seconde détection du capteur de roue.

15. Module d'amarrage selon la revendication 1, dans lequel l'ensemble motorisé comprend un ou plusieurs capteurs de poids ou de force configurés pour détecter une contrainte actuelle exercée sur l'ensemble motorisé par un véhicule amarré ou en cours d'amarrage, et dans lequel le dispositif de commande est configuré pour interrompre un protocole d'amarrage en réponse à une détection que la contrainte est supérieure à un seuil prédéterminé.
